# EUROPÄISCHE PATENTSCHRIFT

(11) **EP 3 245 717 B1**
(45) Veröffentlichungstag und Bekanntmachung des Hinweises auf die Patenterteilung: **07.11.2018**
(21) Anmeldenummer: 15805106.0
(22) Anmeldetag: 04.12.2015
(51) Int. Cl.: H02K 15/00, H01F 41/076, H02K 15/085

(54) **VERFAHREN ZUM BEWICKELN EINES WICKLUNGSTRÄGERS**
METHOD FOR WINDING A WINDING CARRIER
PROCÉDÉ D'ENROULEMENT D'UN SUPPORT D'ENROULEMENT

(30) Priorität: 14.01.2015 DE 102015000439
(43) Veröffentlichungstag der Anmeldung: 22.11.2017
(73) Patentinhaber: Audi AG, 85045 Ingolstadt (DE)
(72) Erfinder: GRÄF, Rolf, 85051 Ingolstadt (DE); STENZEL, Peer, 85051 Ingolstadt (DE)
(74) Vertreter: Eickmeyer, Dietmar
(86) Internationale Anmeldenummer: PCT/EP2015/002451
(87) Internationale Veröffentlichungsnummer: WO 2016/112937

(56) Entgegenhaltungen:
- EP-A1- 2 006 865
- DE-A1-102007 061 532
- DE-A1-102011 008 662
- JP-A- S5 574 109
- US-A1- 2012 001 516

## Beschreibung

Die Erfindung betrifft ein Verfahren zum Bewickeln eines Wicklungsträgers, insbesondere eines Stators einer Elektromaschine, nach dem Oberbegriff des Patentanspruches 1. Unter einer Elektromaschine im Sinne der Erfindung ist generell jegliche Art von Elektromotor, Generator oder dergleichen zu verstehen.

Der Stator einer Elektromaschine wird in gängiger Praxis in der sogenannten Einziehtechnologie bewickelt. Dabei werden lose Kupferspulen mit einem Schablonenwickler erzeugt und dann halbautomatisch oder vollautomatisch mit Hilfe eines Einziehwerkzeuges in die Längsnuten des Stators eingezogen. Nachteilig bei diesem Verfahren sind die erforderlichen weiteren Prozessschritte, nämlich das manuelle Anbringen der Phasenisolierung, das Verschalten, das Zwischen- und Endformen sowie das Bandagieren. Beim Verschalten, das heißt beim manuellen Verlegen der Drähte, werden die Spulenenden nach einem vorgegebenen Verschaltungsschema miteinander verbunden, und zwar beispielhaft unter Bildung dreier Phasen sowie zumindest eines Sternpunktes.

Wie oben erwähnt, erfolgt nach dem Wickel- und Einziehprozess das manuelle Verschalten, bei dem die Drahtbündel zu den zum Beispiel drei Phasen zusammengefasst werden. Anschließend werden im Stand der Technik manuell Kabelschuhe auf die Drahtenden aufgesetzt und werden diese auf einer Vorrichtung abgelegt, um die Drahtenden miteinander zum Beispiel in einem Heißcrimpverfahren zu verbinden.

Im Unterschied dazu ist allgemein auch die Nadelwickeltechnik bekannt, bei der ein definiertes Ablegen von Wickeldrähten erfolgt. Mit diesem Verfahren ist es, im Unterschied zur obigen Einziehtechnik, möglich, die Wickeldrähte direkt zu den exemplarisch drei Phasen zusammenzufassen und an einer definierten Stelle abzulegen. In einem solchen gattungsgemäßen Nadelwickelverfahren wird ein Wickeldraht unter Drahtspannung aus einer Wickelnadel geführt und nach einem vordefinierten Wickelschema im Wicklungsträger (das heißt zum Beispiel dem Stator einer Elektromaschine) abgelegt. Zum Wickelprozessbeginn wird das Drahtende des Wickeldrahts an einer ersten Anbindungsstelle des Wicklungsträgers fixiert. In gleicher Weise wird das weitere Drahtende des Wickeldrahtes zum Wickelprozessende unter Aufrechterhaltung der Drahtspannung an einer zweiten Anbindungsstelle des Wicklungsträgers fixiert. Ein derartiges Nadelwickelverfahren ist grundsätzlich aus der DE 10 2011 008 662 A1 bekannt.

Die Aufgabe der Erfindung besteht darin, eine Vorrichtung zum Bewickeln eines Wicklungsträgers bereitzustellen, bei dem unter Anwendung der Nadelwickeltechnik das Verschalten der Spulenwicklungen des Wicklungsträgers automatisch durchführbar ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 wird der ersten und/oder der zweiten Anbindungsstelle des Wicklungsträgers ein Kontaktelement mit zumindest einem Einfahrschlitz zugeordnet. Der Wickeldraht kann zum Wickelprozessbeginn somit zunächst an der ersten Anbindungsstelle fixiert und anschließend mittels der Wickelnadel durch den Einfahrschlitz des Kontaktelementes geführt werden. Der Wickeldraht wird während des Nadelwickelprozesses in bekannter Weise unter Drahtspannung nach einem vordefinierten Wickelschema im Wicklungsträger abgelegt. Zum Wickelprozessende wird der Wickeldraht durch den Einfahrschlitz eines weiteren Kontaktelementes an der zweiten Anbindungsstelle geführt und mit seinem Drahtende an der zweiten Anbindungsstelle fixiert. Erfindungsgemäß erfolgt im Anschluß an den Wickelprozess ein zusätzlicher Verbindungsschritt, bei dem der Wickeldraht unlösbar (zum Beispiel durch Schweißung oder durch eine Form- und/oder Kraftschlussverbindung) mit dem am Wicklungsträger ausgebildeten Kontaktelement verbunden wird, wobei anschließend die an den Anbindungsstellen fixierten, noch überstehenden Drahtenden vom Wickeldraht abgetrennt werden können.

Mit der Erfindung können zusammengefasst die folgenden manuellen Prozessschritte wegfallen, nämlich das Bündeln der Drähte, das Verschalten der Spulenwicklungen, das Ablegen der Wickeldrähte und das Aufsetzen von Kabelschuhen. Auf diese Weise ergibt sich eine höhere Wirtschaftlichkeit aufgrund der weggefallenen manuellen Prozesse. Zudem ergibt sich eine verbesserte Prozesssicherheit, da in Anwendung der Nadelwickeltechnik die Wickeldrähte definiert, das heißt lagesicher ablegbar sind.

Nachfolgend werden weitere Erfindungsaspekte beschrieben. So kann der Wickeldraht während des Wickelvorgangs in Abhängigkeit vom vordefinierten Wickelschema einfach oder mehrfach durch den Einfahrschlitz des Kontaktelementes geführt werden. Der im Anschluss an den Wickelprozess erfolgende Verbindungsschritt ist bevorzugt ein Schweißschritt oder ein Kraft- und/oder Formschlussschritt, insbesondere ein Heißcrimpverfahren, bei dem der Wickeldraht im Einfahrschlitz des Kontaktelementes verklemmt und verschweißt wird.

In einer technischen Umsetzung der Erfindung kann die erste und/oder zweite Anbindungsstelle einen Fixierstift aufweisen, mit dem das jeweilige Drahtende der Spulenwicklung in Klemmverbindung bringbar ist, oder einen Anwickelpfosten aufweisen, um den das Drahtende zur Fixierung wickelbar ist. Im Hinblick auf eine Bauteilreduzierung ist es von Vorteil, wenn die Anbindungsstelle und das Kontaktelement zu einer einteiligen Baueinheit zusammengefasst sind. Vor diesem Hintergrund kann das Kontaktelement zumindest eine Montageöffnung aufweisen, mittels der das Kontaktelement zum Beispiel lose, jedoch verdrehsicher auf den Fixierstift/Anwickelpfosten der Anbindungsstelle aufsteckbar ist.

In einer einfachen technischen Ausführung kann das Kontaktelement ein Blechteil aus Aluminium oder Kupfer sein. In dem Blechteil sind der Einfahrschlitz und die oben erwähnte Montageöffnung durch Blechbearbeitung ausgebildet. Beispielhaft kann der Einfahrschlitz U-förmig offen gestaltet und durch zwei seitliche Klemmschenkel begrenzt sein. Zur Durchführung des oben erwähnten Schweissverfahrens (alternativ zum Beispiel Heißcrimpverfahren) können außenseitig auf die beiden Klemmschenkel Schweißelektroden mit einer vorgegebenen Fügekraft aufgepresst werden, wodurch die Klemmschenkel unter Bildung einer Kraft-, Formschluss- oder Schweißstelle mit dem Wickeldraht verklemmt bzw. verschweißt sind.

Das Drahtende des Wickeldrahtes erstreckt sich bevorzugt über eine freie Drahtlänge von der so gebildeten Schweißstelle bis zur Anbindungsstelle. Nach erfolgter Verschweißung wird das an der Anbindungsstelle fixierte Drahtende durch Reißen oder durch Schneiden abgetrennt.

Der Wicklungsträger kann eine Mehrzahl von Spulenwicklungen tragen, die nach erfolgtem Wickelprozess in einem vordefinierten Verschaltungsschema miteinander unter Bildung der exemplarisch drei Phasen verschaltet werden. In einer ersten Ausführungsform können jeder der Spulenwicklungen jeweils zwei voneinander separate Kontaktelemente zugeordnet sein, wobei an jedem der Kontaktelemente jeweils ein Drahtende der Spulenwicklung angebunden ist. In Abhängigkeit vom Verschaltungsschema können die voneinander separaten Kontaktelemente miteinander elektrisch verbunden werden.

Alternativ dazu sind die Kontaktelemente nicht separat voneinander ausgeführt, sondern bilden diese vielmehr ein gemeinsames Bauteil, an dem in Abhängigkeit vom Verschaltungsschema Drahtenden unterschiedlicher Spulenwicklungen angebunden sind. Beispielhaft kann zumindest eine Schiene (das heißt ein Schaltring) bereitgestellt sein, der sich um den Wickelträger-Umfang erstreckt und zum Beispiel zwei verschiedene Spulen miteinander verschalten kann. Die Schiene trägt hierzu zumindest zwei umfangsseitig verteilt angeordnete Kontaktelemente, durch deren Einfahrschlitze die Nadel geführt wird.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Schnittdarstellung ein prinzipieller Aufbau einer Elektromaschine;
- Fig. 2: in einer perspektivischen Schnittdarstellung einen Stator einer Drehstrom-Elektromaschine vor der Bewicklung;
- Fig. 3: eine Ansicht entsprechend der Fig. 2 mit bei einer Bewicklung mit einem Wickeldraht;
- Fig. 4: eine Ansicht entsprechend der Fig. 2 den Stator mit einer fertig gestellten Spulenwicklung mit einer Anzahl von Spulenwindungen;
- Fig. 5: eine Detailansicht aus der Fig. 4;
- Fig. 6 bis 17: jeweils Ausführungsvarianten des in den Fig. 1 bis 4 gezeigten Kontaktelementes; und
- Fig. 18 und 19: ein zweites Ausführungsbeispiel der Erfindung.

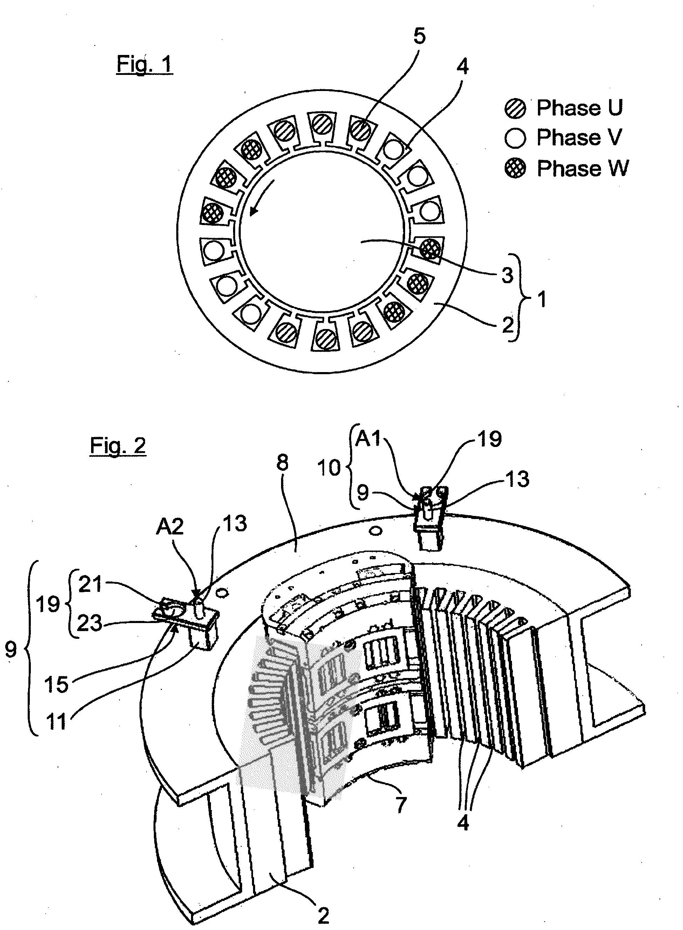

In der Fig. 1 ist schematisch ein Querschnitt durch eine einfache Drehstrom-Elektromaschine 1 angedeutet. Die Elektromaschine 1 weist einen zylindrischen Stator 2 und einen darin drehbar gelagerten Rotor 3 auf. Der Stator 2 weist nach innen gerichtete winkelversetzte Längsnuten 4 auf, durch die jeweils (geschnitten dargestellte) Drahtbündel als Stränge phasenzugeordneter Spulenwicklungen 5 enthalten sind, die mit einem Nadelwickelsystem hergestellt sind. Die Spulenwicklungen der Phase V sind durch vollflächig schwarze Kreise, die Spulenwicklungen der Phase W durch kariert schraffierte Kreise und die Spulenwicklungen der Phase U durch einfach schraffierte Kreise schematisch dargestellt. Im Betrieb der Elektromaschine 1 werden die Spulenwicklungen 5 des Stators 1 derart bestromt, dass ein drehendes Magnetfeld entsteht, das eine Kraftwirkung auf den drehgelagerten Rotor 3 ausübt.

Nachfolgend wird anhand der Fig. 2 bis 5 die Herstellung der Spulenwicklungen 5 am Stator 2 beschrieben, die unter Anwendung der Nadelwickeltechnik erfolgt, bei der ein Wickeldraht durch eine hohlzylindrische Wickelnadel bis zu einer an der Nadelspitze befindlichen Düsenöffnung geführt ist, an der der Wickeldraht 24 unter Drahtspannung austritt sowie unter anderem auf den Nutflächen der Längsnuten 4 des Stators 2 abgelegt wird. Die Wickelnadel ist Bestandteil einer Wickelvorrichtung, mit der die Wickelnadel zum Beispiel in der Stator-Axialrichtung, in der Stator-Radialrichtung und/oder in der Stator-Umfangsrichtung betätigbar ist.

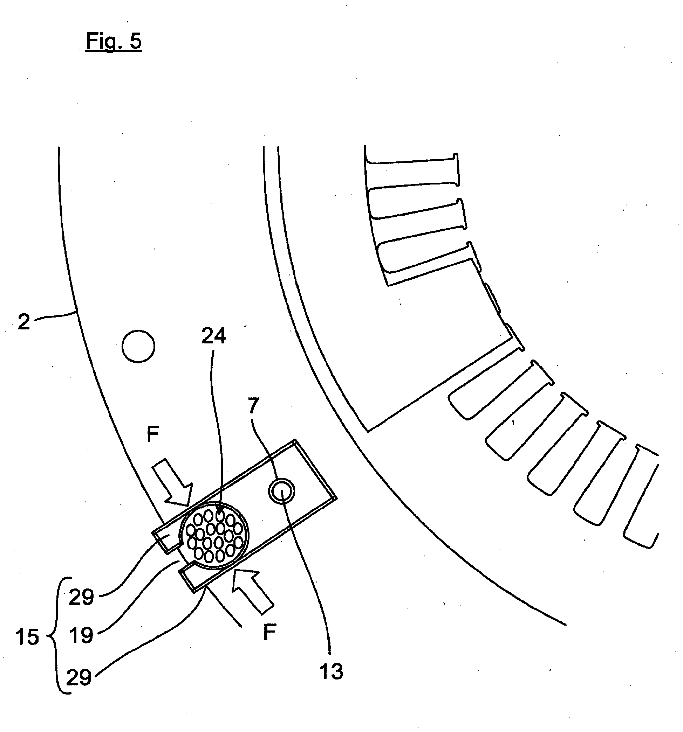

In der Fig. 2 ist der Stator 2 noch in seinem unbewickelten Zustand gezeigt. Der Stator 2 weist in der Fig. 1 zur Herstellung einer verteilten Spulenwicklung 5 ein Montagehilfselement 7 auf. Zudem weist der Stator 2 exemplarisch an seiner oberen Stirnseite 8 zwei voneinander umfangsseitig beabstandete Kontaktelemente 9 auf, deren Funktion später beschrieben ist. Jedes der Kontaktelemente 9 ist mit einem in etwa quaderförmigen Aufnahmeblock 11 an der Stator-Stirnseite 8 befestigt. In der Axialrichtung nach oben ragt vom jeweiligen Aufnahmeblock 11 ein Fixierstift 13 ab. Zudem weist das Kontaktelement 9 ein streifenförmiges Blechteil 15 auf, das an seinem einen Ende mit einer Montageöffnung 17 (Fig. 5) ausgebildet ist, über die das Blechteil 15 auf den Fixierstift 13 gesteckt und am Aufnahmeblock 11 abgestützt ist. Das Blechteil 15 ragt in der Fig. 1 radial nach außen und ist in nicht näher dargestellter Weise positionsfest, das heißt verliersicher sowie drehfest auf dem Aufnahmeblock 11 montiert. An seiner radial äußeren Seite weist das Blechteil 15 einen Einfahrschlitz 19 auf, der radial nach außen U-förmig geöffnet ist. Wie in der Fig. 2 angedeutet ist, wesit der Einfahrschlitz 19 einen im Vergleich zum Einführbereich 21 querschnittsvergrößerten (in den Fig. 2 bis 5 beispielhaft kreisförmigen) Innenbereich 23 auf.

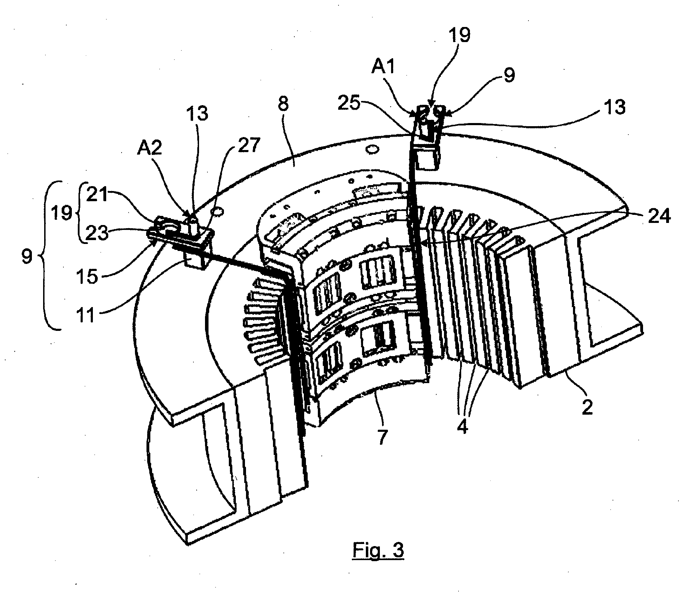

Nachfolgend ist anhand der Fig. 3 ein Wickelprozess erläutert: So wird zu Beginn des Wickelprozesses zunächst ein erstes Drahtende 25 des Wickeldrahts 24 an einer ersten Anbindungsstelle A1 zum Beispiel durch eine schraubenförmige Bewegung der Wickelnadel um den Fixierstift 13 des Kontaktelementes 9 gewickelt. Anschließend wird der Wickeldraht 24 unter Drahtspannung durch den Einfahrschlitz 19 des Kontaktelementes 9 geführt und nach einem vordefinierten Wickelschema im Stator 2 abgelegt. In der Fig. 3 wird der Wickeldraht 24 von der ersten Anbindungsstelle A1 durch eine Längsnut 4 geführt und an der Stator-Unterseite entlang des Montagehilfselementes 7 über eine umfangsversetzte Längsnut 4 wieder zur Stator-Oberseite 8 geführt, und zwar unter Bildung einer Spulenwindung. Das zweite Drahtende 27 wird in der Fig. 3 an einer zweiten Anbindungsstelle A2 angebunden. Hierzu wird das zweite Drahtende 25 durch den Einfahrschlitz 19 des Kontaktelementes 9 geführt und am Fixierstift 13 der zweiten Anbindungsstelle A2 befestigt, um die Drahtspannung im Wickeldraht 24 aufrechtzuerhalten. In dieser Art wird die Spulenwicklung 5 nach einem vorgegebenen Wickelschema realisiert, indem die oben beschriebenen Schritte - ohne separate Anbindung des Drahtes - für eine definierte Anzahl paralleler Drähte wiederholt werden.

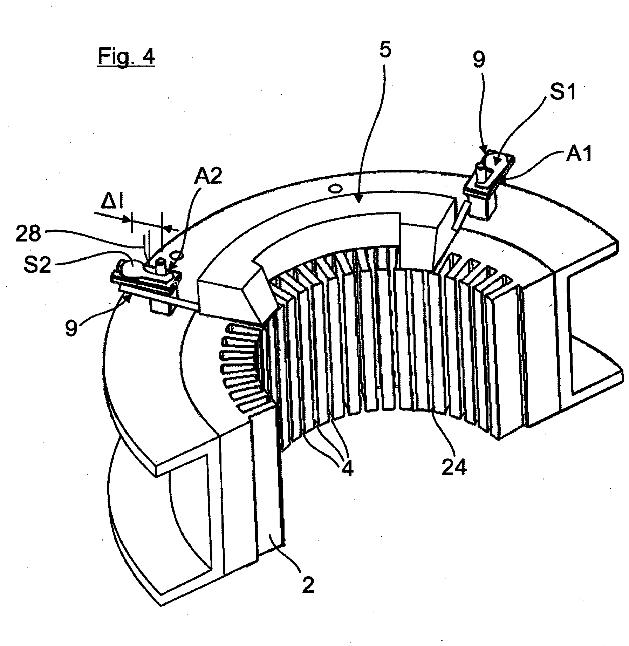

In der Fig. 4 ist ein Bewicklungszustand mit einer fertig gestellten Spulenwicklung 5 dargestellt, bei der der Einfahrschlitz 19 des Kontaktelementes 9 einer Phase mit Wickeldrähten gefüllt ist, das heißt das Wickeln der parallelen Drähte mit einer bestimmten Windungszahl (Spulengruppe) abgeschlossen ist.

Im Anschluss an den Wickelprozess erfolgt erfindungsgemäß ein Verbindungsschritt, der nachfolgend anhand der Fig. 4 und 5 erläutert ist. Im Verbindungsschritt werden die an den Anbindungsstellen A1, A2 durch den Einfahrschlitz 19 geführten Wickeldrähte 24 mit zum Beispiel einem Schweißverfahren am Blechteil 15 des jeweiligen Kontaktelementes 9 verschweißt. Demzufolge werden außenseitig auf seitliche, den Einfahrschlitz 19 begrenzende Klemmschenkel 29 nicht dargestellte Schweißelektroden mit einer vorgegebenen Fügekraft F aufgepresst. Die Klemmschenkel 29 des Kontaktelementes 9 werden somit unter Bildung einer Schweißstelle S1, S2 (Fig. 4) mit den Wickeldrähten 24 verklemmt und verschweißt. Zwischen der Schweißstelle S1, S2 und der Anbindungsstelle A1, A2 erstreckt sich das jeweilige Drahtende 25, 27 der Spulenwicklung 5 über eine freie Drahtlänge Δl (Fig. 4), an der das Drahtende mittels einer angedeuteten Schneideinheit 28 (Fig. 4) von der Spulenwicklung 5 abgetrennt wird.

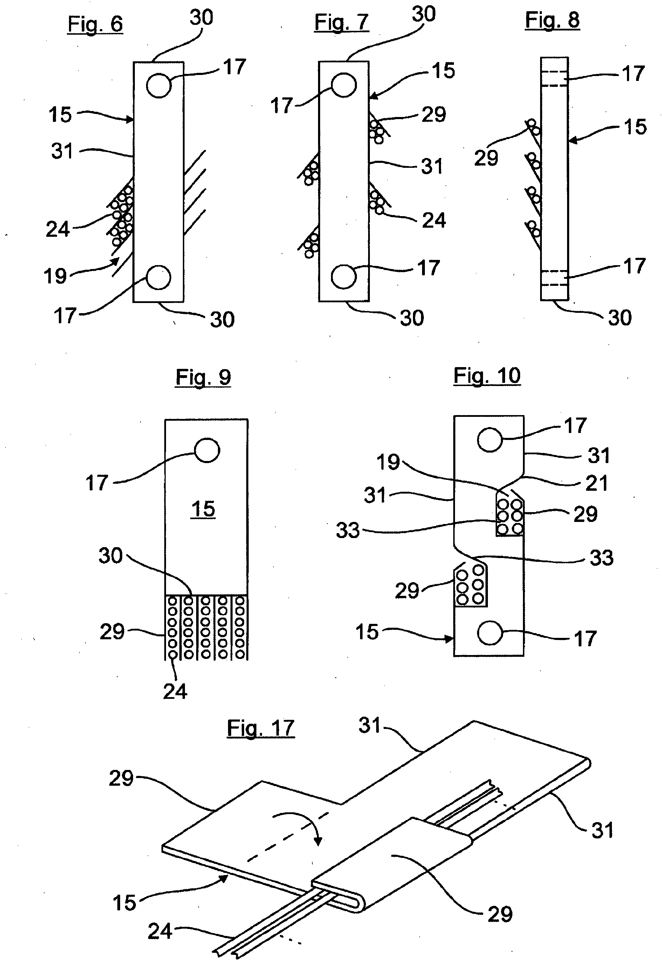

In den Fig. 6 bis 17 sind Ausführungsvarianten des Kontaktelementes 9 dargestellt, wobei insbesondere die Geometrie des Blechteils 15 variiert ist: So ist in den Fig. 6 und 7 das Blechteil 15 ebenfalls leistenförmig ausgeführt, wobei es an beiden Schmalseiten 31 jeweils eine Montageöffnung 17 aufweist und an den Längsseiten 31 jeweils unter Bildung von Einfahrschlitzen 19 Schenkel 29 abragen, die in unterschiedlichen Winkeln schräggestellt sind. In der Fig. 8 sind die, die Einfahrschlitze 19 begrenzenden Schenkel 29 nicht randseitig am Blechteil 15 angeformt, sondern ragen diese von den Flächenseiten des Blechteils 15 vor, während in der Fig. 9 die Schenkel 29 an einer unteren Schmalseite 31 des Blechteils 15 ausgebildet sind.

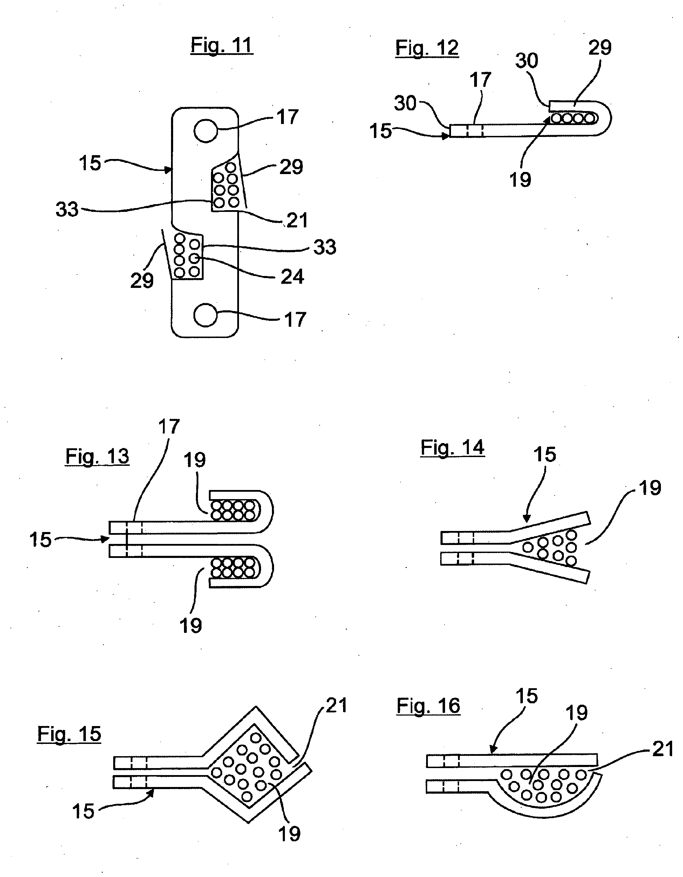

In den Fig. 10 und 11 sind an den Längsseiten 31 des Blechteils 15 Aufnahmetaschen 33 eingearbeitet. Diese definieren die Einfahrschlitze 19, die seitlich nach außen durch Halteschenkel 29 begrenzt und einen offenen Einführabschnitt 21 aufweisen. In der Fig. 12 ist das streifenförmige Blechteil 15 an einer Schmalseite 30 unter Bildung eines U-förmigen Einfahrschlitzes 19 umgebogen.

In der Fig. 13 bis 16 ist das Blechteil 15 unter Bildung einer Doppelwandstruktur zweilagig aufgebaut, wobei in der Fig. 13 und in der Fig. 14 die Doppelwandstruktur mit Bezug beispielhaft auf eine Mittelachse spiegelsymmetrisch ausgeführt ist. In der Fig. 13 sind die beiden Blechlagen, wie in der Fig. 12, an einer Seite jeweils nach außen U-förmig umgebogen. In der Fig. 14 sind die beiden Blechlagen dagegen lediglich unter Bildung eines V-förmigen mittleren Einführschlitzes 19 aufgebogen.

In der Fig. 15 sind die beiden übereinander liegenden Blechlagen des Blechteils 15 rechtwinklig nach außen gebogen, und zwar unter Bildung eines im Wesentlichen im Profil rechteckförmigen Einfahrschlitzes 19, wobei die beiden, in der Fig. 15 rechten Randkanten unter Bildung des offenen Einführbereiches 21 voneinander geringfügig beabstandet sind. Gleiches trifft auch auf die Fig. 16 zu, in der jedoch der Einfahrschlitz 19 im Profil halbkreisförmig ausgeführt ist.

In der Fig. 17 weist das Blechteil 15 an seinen Längsseiten 31 seitlich abragende Blechlaschen auf, die die Klemmschenkel 29 bilden. Während einer Drahtablage sind die Blechlaschen seitlich nach außen geklappt (vgl. linke Seite der Fig. 17). Nach Beendigung der Drahtablage werden die beiden Blechlaschen unter Verklemmung der abgelegten Wickeldrähte 24 umgeklappt.

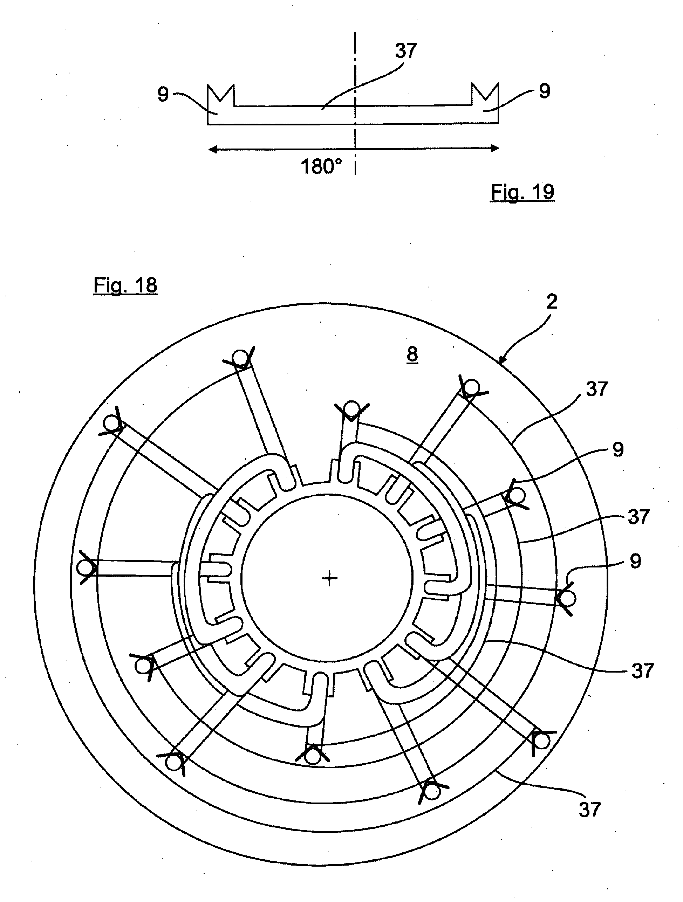

In der Fig. 18 sind an einer Stator-Stirnseite 8 vier zueinander beispielhaft konzentrisch oder axial angeordnete Schienen 37 vorgesehen, die beispielhaft jeweils zwei verschiedene Spulen miteinander verschalten. Insgesamt sind in der Fig. 18 die Spulen exemplarisch so miteinander verbunden, dass sich drei Phasen und ein Sternpunkt ergeben. Jede der Schienen 37 trägt hierfür umfangsseitig verteilt angeordnete Kontaktelemente 9, durch deren Einfahrschlitze 19 die Nadel geführt wird. Die Fig. 19 zeigt einen der Schaltringe 37 in Abwicklung. An dessen Enden ist jeweils ein Kontaktelement 19 ausgebildet.

## Patentansprüche

1. Verfahren zum Bewickeln eines Wicklungsträgers (2), insbesondere eines Stators einer Elektromaschine (1), unter Anwendung der Nadelwickeltechnik, welcher Wicklungsträger (2) in Umfangsrichtung abwechseln Zähne und Nuten (4) aufweist, durch die zumindest eine Spulenwicklung (5) mit einer Anzahl von Spulenwindungen geführt wird, in welchem Verfahren ein Wickeldraht unter Drahtspannung aus einer Wickelnadel austritt und in einem vordefinierten Wickelschema im Wicklungsträger (2) abgelegt wird, wobei ein Drahtende (25) des Wickeldrahts zum Wickelprozessbeginn an einer ersten Anbindungsstelle (A1) fixiert wird und das weitere Drahtende (27) des Wickeldrahts zum Wickelprozessende unter Aufrechterhaltung der Drahtspannung an einer zweiten Anbindungsstelle (A2) fixiert wird, **dadurch gekennzeichnet, dass** der ersten und/oder zweiten Anbindungsstelle (A1, A2) ein Kontaktelement (9) mit zumindest einem offenen Einfahrschlitz (19) zugeordnet ist, durch den der Wickeldraht (24) nach/vor dem Fixieren seiner Drahtenden (25, 27) geführt wird, und dass im Anschluss an den Wickelprozess ein Verbindungsschritt erfolgt, bei dem der Wickeldraht (24) unlösbar mit dem Kontaktelement (9) verbunden wird und anschließend die an den Anbindungsstellen (A1, A2) fixierten Drahtenden (25, 27) vom Wickeldraht (24) abgetrennt werden.

2. Verfahren nach Anspruch 1, **dadurch gekennzeichnet, dass** der Wickeldraht (24) während des Wickelprozesses, je nach vordefiniertem Wickelschema, einfach oder mehrfach durch den Einfahrschlitz (19) des Kontaktelements (9) geführt wird.

3. Verfahren nach Anspruch 1 oder 2, **dadurch gekennzeichnet, dass** der im Anschluss an den Wickelprozess erfolgende Verbindungsschritt ein Schweißverfahren oder ein Kraft- und/oder Formschlussverfahren ist, insbesondere ein Heißcrimpverfahren, bei dem der Wickeldraht (24) im Einfahrschlitz (19) verklemmt und unlösbar verbunden wird, und zwar insbesondere unter Bildung einer von der Anbindungsstelle (A1, A2) beabstandeten Kraft-/Formschluß- oder Schweißstelle (S1, S2).

4. Verfahren nach einem der vorhergehenden Ansprüche, **dadurch gekennzeichnet, dass** die erste und/oder zweite Anbindungsstelle (A1, A2) einen Fixierstift oder Anwickelpfosten (13) aufweist, mit dem das Drahtende (25, 27) in Klemmverbindung gebracht oder um den das Drahtende (25, 27) gewickelt wird.

5. Verfahren nach einem der vorhergehenden Ansprüche, **dadurch gekennzeichnet, dass** das Kontaktelement (9) ein Blechteil (15) aufweist, in dem der Einfahrschlitz (19) und die Montageöffnung (17) ausgebildet ist.

6. Verfahren nach einem der vorhergehenden Ansprüche, **dadurch gekennzeichnet, dass** die Anbindungsstelle (A1, A2) und das Kontaktelement (9) zu einer Baueinheit (10) zusammengefasst sind, und dass insbesondere das Kontaktelement (9) zumindest eine Montageöffnung (17) aufweist, mittels der das Kontaktelement (9) auf den Fixierstift (13) der Anbindungsstelle (A1, A2) lagefest aufsteckbar ist.

7. Verfahren nach einem der vorhergehenden Ansprüche, **dadurch gekennzeichnet, dass** der Einfahrschlitz (19) U-förmig offen gestaltet ist, und/oder dass das Kontaktelement (9) zwei Klemmschenkel (29) mit zwischengeordnetem Einfahrschlitz (19) aufweist, und dass zur Durchführung des Schweißverfahrens außenseitig auf die Klemmschenkel (29) Schweißelektroden mit einer vorgegebenen Fügekraft (F) aufgepresst wird, wodurch die Klemmschenkel (29) das Kontaktelements (9) unter Bildung der Schweißstelle (S) mit dem durchgeführten Wickeldraht (24) verklemmt und verschweißt werden.

8. Verfahren nach Anspruch 7, **dadurch gekennzeichnet, dass** die Schweißstelle (S) und die Anbindungsstelle (A) über eine freie Drahtlänge (Δl) voneinander beabstandet sind, und/oder dass das an der Anbindungsstelle (A) fixierte Drahtende (25, 27) durch Reißen oder durch Schneiden abgetrennt wird.

9. Verfahren nach einem der vorhergehenden Ansprüche, **dadurch gekennzeichnet, dass** der Wicklungsträger (2) eine Mehrzahl von Spulenwicklungen (5) trägt, und dass die Spulenwicklungen (5) nach erfolgtem Wickelprozess in einem vordefinierten Verschaltungsschema miteinander unter Bildung von Phasen (U, V, W) miteinander verschaltet werden.

10. Verfahren nach Anspruch 9, **dadurch gekennzeichnet, dass** jeder Spulenwicklung (5) zwei voneinander separate Kontaktelemente (9) zugeordnet sind, an denen jeweils ein Drahtende (25, 27) der Spulenwicklung (5) angebunden ist, und dass die voneinander separaten Kontaktelemente (9) in Abhängigkeit vom Verschaltungsschema miteinander verschaltet werden.

11. Verfahren nach Anspruch 9, **dadurch gekennzeichnet, dass** die Kontaktelemente (9) der Spulenwicklungen (5) zumindest teilweise zu einem gemeinsamen Bauteil, insbesondere einen Schaltring oder dergleichen, zusammengefasst sind, an dem in Abhängigkeit vom Verschaltungsschema . Drahtenden (25, 27) unterschiedlicher Spulenwicklungen (5) anbindbar sind.

## Claims

1. Method for winding a winding carrier (2), in particular a stator of an electric machine (1), using the needle winding technique, said winding carrier (2) having teeth and grooves (4) which alternate in the circumferential direction and through which at least one coil winding (5) having a number of coil turns is guided, in which method a winding wire emerges from a winding needle under wire tension and is laid in a predefined winding pattern in the winding carrier (2), wherein one wire end (25) of the winding wire is fixed at a first attachment point (A1) at the start of the winding process and the other wire end (27) of the winding wire is fixed at a second attachment point (A2), maintaining the wire tension, at the end of the winding process, **characterised in that** the first and/or second attachment point (A1, A2) is assigned a contact element (9) with at least one open insertion slot (19), through which the winding wire (24) is guided after/before its wire ends (25, 27) are fixed, and that following the winding process a connecting step takes place, in which the winding wire (24) is connected non-detachably to the contact element (9) and subsequently the wire ends (25, 27) fixed at the attachment points (A1, A2) are severed from the winding wire (24).

2. Method according to claim 1, **characterised in that**, during the winding process, depending on the predefined winding pattern, the winding wire (24) is guided singly or multiply through the insertion slot (19) of the contact element (9).

3. Method according to claim 1 or 2, **characterised in that** the connecting step taking place following the winding process is a welding process or a force-fit and/or form-fit process, in particular a hot-crimping process, in which the winding wire (24) is jammed in the insertion slot (19) and non-detachably connected, more particularly with the formation of a force-fit/form-fit or welding spot (S1, S2) spaced apart from the attachment point (A1, A2).

4. Method according to any one of the preceding claims, **characterised in that** the first and/or second attachment point (A1, A2) has a fixing pin or winding post (13), with which the wire end (25, 27) is brought into a clamped connection or around which the wire end (25, 27) is wound.

5. Method according to any one of the preceding claims, **characterised in that** the contact element (9) has a sheet-metal part (15), in which the insertion slot (19) and the mounting opening (17) are formed.

6. Method according to any one of the preceding claims, **characterised in that** the attachment point (A1, A2) and the contact element (9) are combined into a standard component (10), and that in particular the contact element (9) has at least one mounting opening (17), by means of which the contact element (9) can be placed securely onto the fixing pin (13) of the attachment point (A1, A2).

7. Method according to any one of the preceding claims, **characterised in that** the insertion slot (19) is of an open U shape, and/or that the contact element (9) has two clamping legs (29) with insertion slot (19) disposed between them, and that, for performing of the welding process, welding electrodes are pressed onto the outside of the clamping legs (29) with a specified joining force (F), as a result of which the clamping legs (29) of the contact element (9) are clamped and welded to the winding wire (24) guided through them with the formation of the welding spot (S).

8. Method according to claim 7, **characterised in that** the welding spot (S) and the attachment point (A) are spaced apart from each other over a free wire length (Δl), and/or that the wire end (25, 27) fixed at the attachment point (A) is severed by snapping or by cutting.

9. Method according to any one of the preceding claims, **characterised in that** the winding carrier (2) carries a plurality of coil windings (5), and that, after the winding process has taken place, the coil windings (5) are interconnected according to a predefined interconnection pattern with the formation of phases (U, V, W).

10. Method according to claim 9, **characterised in that** each coil winding (5) is assigned two contact elements (9), separate from each other, to each of which a wire end (25, 27) of the coil winding (5) is connected, and that the contact elements (9), separate from each other, are interconnected in dependence on the interconnection pattern.

11. Method according to claim 9, **characterised in that** the contact elements (9) of the coil windings (5) are combined at least in part into a common component, in particular a switching ring or the like, to which wire ends (25, 27) of different coil windings (5) are connectable in dependence on the interconnection pattern.

## Revendications

1. Procédé d'enroulement d'un support d'enroulement (2), en particulier d'un stator d'une machine électrique (1), en utilisant la technique de bobinage à aiguille, lequel support d'enroulement (2) présente alternativement des dents et des rainures (4) dans une direction périphérique à travers lesquelles au moins un enroulement de bobine (5) avec un nombre de spires de bobine est guidé, dans lequel procédé un fil de bobinage sort d'une aiguille de bobinage sous une tension de fil et est déposé en un schéma de bobinage prédéfini dans le support d'enroulement (2), dans lequel une extrémité de fil (25) du fil de bobinage pour le début de processus de bobinage est fixée à un premier site de liaison (A1) et l'autre extrémité de fil (27) du fil de bobinage pour la fin de processus de bobinage est fixée en maintenant la tension de fil à un deuxième site de liaison (A2), **caractérisé en ce qu'**au premier et/ou deuxième site de liaison (A1, A2) est associé un élément de contact (9) avec au moins une fente d'entrée (19) ouverte, à travers laquelle le fil de bobinage (24) est guidé après/avant la fixation de ses extrémités de fil (25, 27), et qu'à la suite du processus de bobinage une étape de liaison est effectuée, dans laquelle le fil de bobinage (24) est relié de façon non détachable avec l'élément de contact (9) et ensuite les extrémités de fil (25, 27) fixées aux sites de liaison (A1, A2) sont séparées du fil de bobinage (24).

2. Procédé selon la revendication 1, **caractérisé en ce que** le fil de bobinage (24) est guidé pendant le processus de bobinage, en fonction d'un schéma de bobinage prédéfini, une fois ou plusieurs fois dans la fente d'entrée (19) de l'élément de contact (9).

3. Procédé selon la revendication 1 ou 2, **caractérisé en ce que** l'étape de liaison ayant lieu à la suite du processus de bobinage est un procédé de soudage ou un procédé d'assemblage par force et/ou par complémentarité de forme, en particulier un procédé de sertissage à chaud, dans lequel le fil de bobinage (24) est bloqué dans la fente d'entrée (19) et est relié de façon non détachable, et ce en particulier en formant un site d'assemblage par force/par complémentarité de forme ou de soudage (S1, S2) espacé du site de liaison (A1, A2).

4. Procédé selon l'une quelconque des revendications précédentes, **caractérisé en ce que** le premier et/ou deuxième site de liaison (A1, A2) présente une pointe de fixation ou un piquet d'enroulement (13) avec lequel l'extrémité de fil (25, 27) est placée en liaison de serrage ou autour duquel l'extrémité de fil (25, 27) est enroulée.

5. Procédé selon l'une quelconque des revendications précédentes, **caractérisé en ce que** l'élément de contact (9) présente une pièce de tôle (15) dans laquelle la fente d'entrée (19) et l'ouverture de montage (17) sont réalisées.

6. Procédé selon l'une quelconque des revendications précédentes, **caractérisé en ce que** le site de liaison (A1, A2) et l'élément de contact (9) sont réunis en une unité modulaire (10), et qu'en particulier l'élément de contact (9) présente au moins une ouverture de montage (17), au moyen de laquelle l'élément de contact (9) peut être fiché sur la pointe de fixation (13) du site de liaison (A1, A2).

7. Procédé selon l'une quelconque des revendications précédentes, **caractérisé en ce que** la fente d'entrée (19) a une configuration ouverte en forme de U, et/ou que l'élément de contact (9) présente deux branches de serrage (29) avec une fente d'entrée (19) intercalée, et que pour la réalisation du procédé de soudage du côté extérieur sur les branches de serrage (29) des électrodes de soudage sont appliquées par pression avec une force d'assemblage prédéterminée (F), moyennant quoi les branches de serrage (29) de l'élément de contact (9) sont serrées et soudées avec le fil de bobinage (24) inséré en formant le site de soudage (S).

8. Procédé selon la revendication 7, **caractérisé en ce que** le site de soudage (S) et le site de liaison (A) sont espacés l'un de l'autre sur une longueur de fil libre (Δl), et/ou que l'extrémité de fil (25, 27) fixée au site de liaison (A) est séparée par arrachage ou par coupe.

9. Procédé selon l'une quelconque des revendications précédentes, **caractérisé en ce que** le support d'enroulement (2) porte une pluralité de spires de bobine (5), et que les spires de bobine (5) sont raccordées les unes aux autres après le bon déroulement du processus de bobinage en un schéma de raccordement prédéfini en formant des phases (U, V, W).

10. Procédé selon la revendication 9, **caractérisé en ce qu'**à chaque spire de bobine (5) sont associés deux éléments de contact (9) séparés l'un de l'autre, auxquels respectivement une extrémité de fil (25, 27) de la spire de bobine (5) est liée, et que les éléments de contact (9) séparés l'un de l'autre sont raccordés l'un à l'autre en fonction du schéma de raccordement.

11. Procédé selon la revendication 9, **caractérisé en ce que** les éléments de contact (9) des spires de bobine (5) sont réunis au moins partiellement en une unité modulaire commune, en particulier une bague de commande ou similaire, à laquelle peuvent être liées des extrémités de fil (25, 27) de différentes spires de bobine (5) en fonction du schéma de raccordement.
